**Europäisches Patentamt**

**European Patent Office**

**Office européen des brevets**

(11) Numéro de publication: **0 015 215**
**B2**

(19)

(12) # NOUVEAU FASCICULE DE BREVET EUROPEEN

(45) Date de publication du nouveau fascicule du brevet:
**07.01.88**

(51) Int. Cl.⁴: **B 21 D 43/10**

(21) Numéro de dépôt: **80400262.4**

(22) Date de dépôt: **25.02.80**

(54) **Chargeur ou extracteur de pièces.**

(30) Priorité: 27.02.79 FR 7906181
21.09.79 FR 7924004

(43) Date de publication de la demande:
**03.09.80 Bulletin 80/18**

(45) Mention de la délivrance du brevet:
**19.05.82 Bulletin 82/20**

(45) Mention de la décision concernant l'opposition:
**07.01.88 Bulletin 88/1**

(84) Etats contractants désignés:
**DE GB IT**

(56) Documents cités:
**DE - A - 1 463 080**
**DE - A - 1 477 609**
**DE - A - 1 481 147**
**DE - A - 2 206 641**
**DE - A - 2 702 252**
**FR - A - 2 187 448**
**FR - A - 2 292 531**
**FR - A - 2 360 485**
**FR - A - 2 406 485**
**GB - A - 1 032 843**
**US - A - 3 179 262**
**US - A - 3 335 839**
**US - A - 3 546 956**
**US - A - 3 873 899**

(73) Titulaire: **AUTOMOBILES CITROEN, 62 Boulevard
Victor-Hugo, F-92200 Neuilly-sur-Seine (FR)**
Titulaire: **AUTOMOBILES PEUGEOT, 75, avenue de la
Grande Armée, F-75116 Paris (FR)**

(72) Inventeur: **Delehonte, Jack Fernand, 22, rue de Bellevue,
F-91600 Savigny s/Orge (FR)**

(74) Mandataire: **Boivin, Claude, 9, rue Edouard-Charton,
F-78000 Versailles (FR)**

ACTORUM AG

## Description

La présente invention concerne un chargeur ou extracteur de pièces comportant un chariot mobile horizontalement de long d'un bâti fixe, un coulisseau mobile verticalement monté sur le chariot et portant un support muni de moyens de préhension propres à saisir une tôle ou une pièce, un premier moteur associé à des moyens de transmission pour déplacer horizontalement le chariot et un second moteur pour déplacer verticalement le coulisseau, ces deux moteurs étant montés fixes sur le bâti.

Les chargeurs destinés à placer une tôle sous une presse ou les extracteurs permettant de retirer la pièce qui vient d'être emboutie et à la déposer sur un transporteur comportant un chariot qui est mobile en translation sur des rails de guidage, suivant un mouvement de va-et-vient, et supporte des moyens propres à saisir la pièce.

Généralement, les extracteurs sont du type à pince, la prise de la tôle se faisant par serrage des becs de la pince et sa dépose par ouverture de ces becs.

Les chargeurs sont généralement à ventouses mais on connaît également des extracteurs à ventouse. Dans ceux-ci, le support des ventouses est toujours mobile verticalement par rapport au chariot de façon à pouvoir soulever et déposer la tôle à emboutir ou encore soulever et déposer la pièce emboutie.

Le brevet américain 3 335 839 décrit un appareil de transport de pièces dans lequel un coulisseau portant des moyens de préhension est monté coulissant verticalement par rapport au chariot. Deux moteurs montés fixes sur le bâti de l'appareil permettent de déplacer respectivement le chariot horizontalement et le coulisseau verticalement. L'arbre de sortie du second moteur est relié à un arbre cannelé monté à rotation par rapport au bâti et sur lequel est claveté coulissant un pignon immobilisé latéralement par rapport au coulisseau.

Dans cette appareil, le poids du coulisseau exerce sur l'arbre cannelé un couple important nuisible au bon fonctionnement de l'appareil.

La présente invention a pour objet un chargeur ou extracteur de pièces, en particulier à ventouses, qui est du type décrit dans le brevet américain précité, mais dans lequel le couple à vide exercé sur l'arbre cannelé par le poids du coulisseau et son support est équilibré.

Ce chargeur ou extracteur de pièces est caractérisé en ce que le pignon est en prise avec une crémaillère solidaire du coulisseau et en ce que le chargeur comporte des moyens pour équilibrer le couple exercé sur l'arbre cannelé par le poids du coulisseau et de son support.

Ces moyens d'équilibrage comprennent un vérin commandant une crémaillère qui est en prise avec un pignon calé sur l'arbre, des moyens empêchant la crémaillère d'être entraînée en rotation par l'arbre.

Le premier moteur est avantageusement un moteur à courant continu par un variateur statique, ce variateur étant agencé pour que la loi de mouvement de l'avance du chariot ainsi que celle de son recul corresponde à une accélération constante suivie d'une décélération constante. Ainsi qu'on le sait, un variateur statique fournit à un moteur un courant haché dans lequel on peut supprimer un certain nombre de créneaux par seconde; il est facile par une suppression convenable de ces créneaux d'obtenir la loi de vitesse désirée; en variante, on peut supprimer une partie de chaque créneau sans modifier la fréquence.

Le chariot peut être fixé à au moins une courroie d'entraînement qui passe sur une poulie reliée à l'arbre du premier moteur. La loi de mouvement du chariot est ainsi la même que celle du moteur, ce qui facilite le réglage du variateur.

Le long des rails de guidage du chariot peuvent être disposés des détecteurs de proximité qui sont actionnés par le chariot pendant son déplacement et règlent le variateur, par exemple en agissant sur des thyristors que celui-ci comporte éventuellement. En variante il peut être prévu une mémoire intervenant séquentiellement sur le variateur.

Le chariot est avantageusement monté sur les rails de guidage par l'intermédiaire de patins de glissement. Le frottement de ces patins sur les rails facilite, en effet, l'obtention de la loi de mouvement désirée. Les patins peuvent être remplacés par des galets.

On a décrit ci-après, à titre d'exemple non limitatif, un mode de réalisation d'un chargeur ou extracteur selon l'invention avec référence au dessin annexé dans lequel:

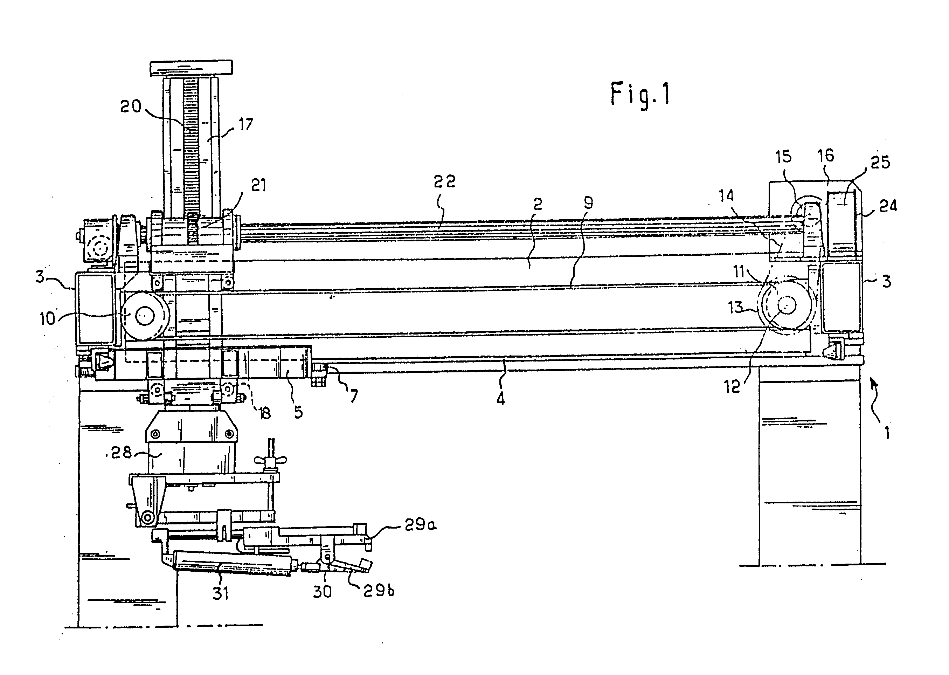

La Figure 1 est une vue en élévation du chargeur ou extracteur,

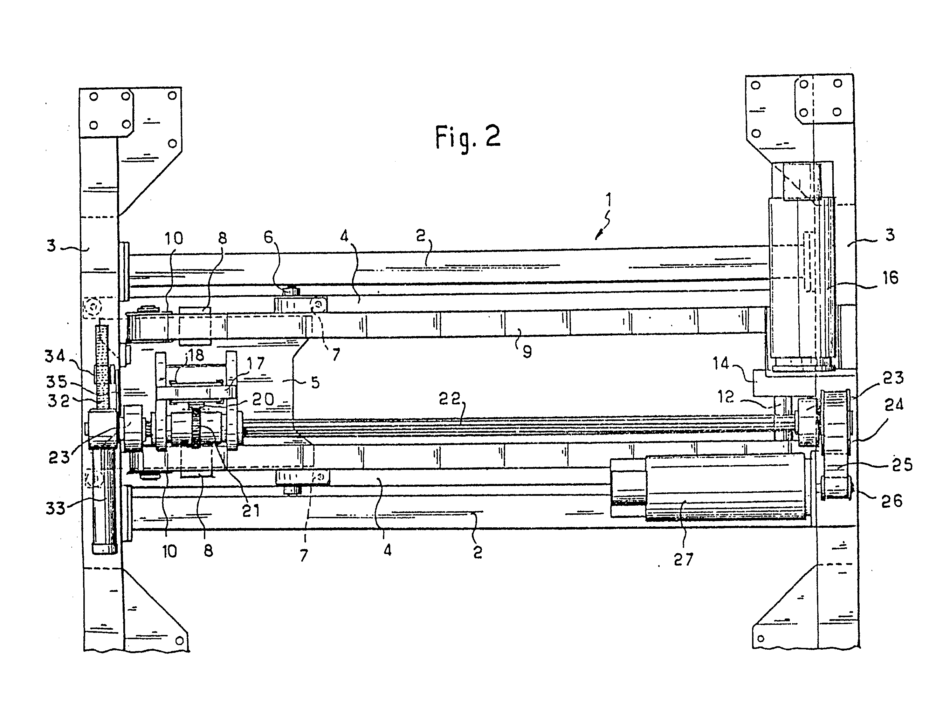

La Figure 2 en est une vue en plan,

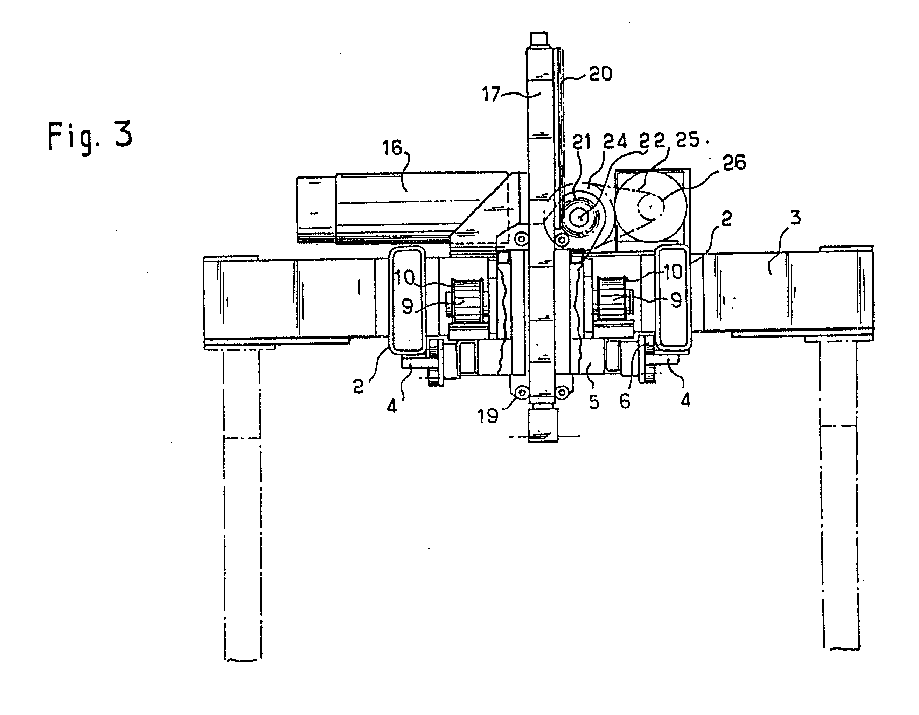

La Figure 3 en est en vue en bout avec arrachement partiel,

La Figure 4 est une vue en élévation schématique d'un détail.

La Figure 5 en est une coupe suivant V-V de la figure 4,

La Figure 6 montre la loi de mouvement du chariot, lors d'un cycle de travail.

Tel qu'il est représenté au dessin, l'extracteur de pièces selon l'invention comporte un bâti fixe 1 comprenant deux poutres longitudinales 2 réunies l'une à l'autre par deux poutres transversales 3.

Le bâti 1 porte des rails de guidage 4 pour un chariot 5 qui comporte, à cet effet, des galets de support 6 et des galets de guidage 7 qui interdisent tout débattement transversal du chariot. Ce dernier est fixé en δ à des courroies crantées 9 dont chacune passe sur une poulie de renvoi 10 et une poulie d'entraînement 11 qui est calée sur un arbre 12. Cet arbre porte également une poulie 13 qui est reliée par une courroie crantée 14 à une poulie 15 calée sur l'arbre de sortie d'un moteur 16 à courant continu; celui-ci est fixé sur le bâti 1 et est alimenté par un variateur statique de type connu en soi et non représenté; ce variateur fournit au moteur un courant haché dont un certain nombre de créneaux par seconde sont supprimés de façon à obtenir la loi de vitesse désirée.

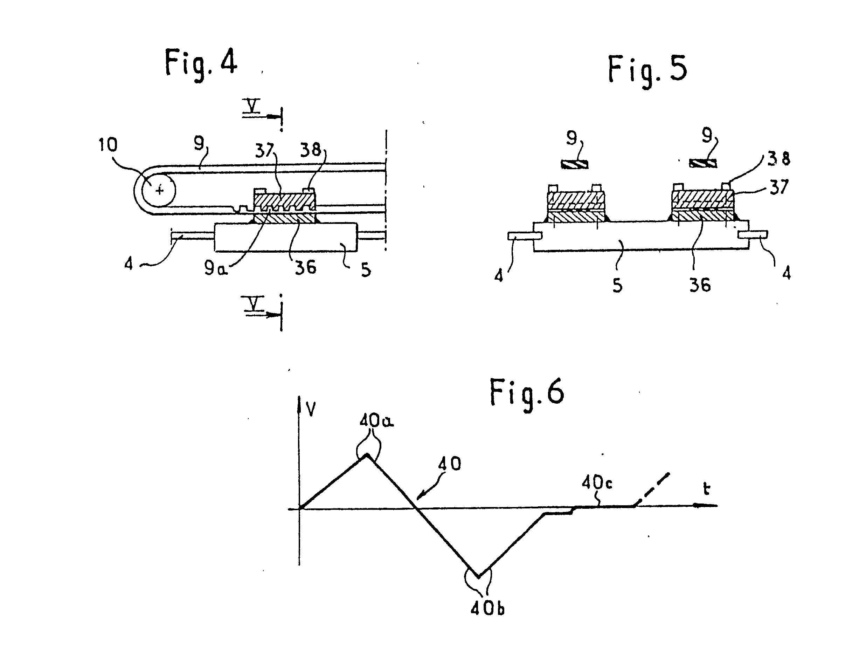

Comme on le voit plus particulièrement aux Figures 4 et 5, dans lesquelles le chariot 5 n'est représenté que schématiquement, chacune des courroies d'entraînement 9 comporte une partie 9a enserrée entre une plage supérieure 36 du chariot 5 et une pièce 37 qui est fixée sur la plage 36 par des boulons 38. La plage 36 et la pièce 37 comportent des rainures qui viennent s'engager dans les crans intérieurs des courroies.

Un coulisseau 17 est monté coulissant dans le chariot 5, en étant guidé par des galets 18 et 19. Les galets 18 empêchent un débattement du coulisseau dans la direction de déplacement du chariot 5 et les galets 19 empêchent son débattement dans la direction perpendiculaire.

Le coulisseau 17 porte une crémaillère 20 qui est en prise avec un pignon 21 claveté coulissant sur un arbre 22, immobilisé latéralement par rapport au coulisseau, mais pouvant tourner par rapport à lui. De préférence, le pignon 21 porte dans son alésage central une douille maintenant des billes engagées dans des canelures de l'arbre 22. Celui-ci s'étend longitudinalement par rapport au bâti 1 et est monté pivotant dans des paliers 23 portés par ce bâti. Sur l'une de ses extrémités est fixée une poulie 24 qui est reliée par une courroie crantée 25 à une poulie 26 sur l'arbre de sortie d'un moteur 27.

Le coulisseau 17 porte à sa partie inférieure un support 28 pour un bras porte-ventouses ou, dans l'exemple représenté, pour une pince dont un des mors 29a est solidaire du support alors que son autre mors 29b est monté pivotant en 30 sur ce support et peut être commandé par un vérin 31.

On voit de la description qui précède que la pince 29a-29b de l'extracteur peut être déplacée de manière indépendante horizontalement à l'aide du moteur 16 et verticalement à l'aide du moteur 27, les deux moteurs 16 et 27 étant disposés à poste fixe. Ces deux moteurs sont, de préférence, des moteurs à courant continu commandés par des variateurs statiques.

Le poids du support 28 tend à déplacer vers le bas le coulisseau 17 et exerce ainsi un couple sur l'arbre 22. Pour compenser ce couple, cet arbre porte un pignon non visible au dessin qui est en prise avec un crémaillère 32. Cette crémaillère est solidaire de la tige du piston d'un vérin 33 et est plaquée par le poids du coulisseau 17 et du support 28 contre un galet 34 monté pivotant à l'extrémité d'un levier fixe 35. La force exercée par le vérin est déterminée de façon à exercer sur l'arbre 22 un couple équilibrant celui dû au coulisseau et au support.

Comme indiqué précédemment, le moteur 16 est commandé par un variateur statique. Ce variateur est réglé de manière connue en soi, de manière que la translation du chariot 5 s'effectue, dans un sens comme dans l'autre, suivant un mouvement à accélération constante suivi d'un mouvement à décélération constante. La courbe 40 à la Figure 6 montre la variation de la vitesse du chariot en fonction du temps au cours d'un cycle. La partie 40a de cette courbe correspond à l'avance du chariot et sa partie 40b au retour de ce chariot a proximité d'une presse. La partie 40b est suivie d'une partie 40c période au cours de laquelle le chariot est immobile, la pince 29a-29b venant saisir une tôle qui vient d'être emboutie.

Il va de soi que la présente invention ne doit pas être considérée comme limitée au mode de réalisation décrit et représenté, mais en couvre, au contraire, toutes les variantes. C'est ainsi, par exemple, qu'on pourrait prévoir un calculateur contenant en mémoire les consignes nécessaires au fonctionnement du variateur.

**Revendications**

1. Chargeur ou extracteur de pièces comportant un chariot mobile (5) mobile horizontalement de long d'un bâti fixe (1), un coulisseau (17) mobile verticalement monté sur le chariot (5) et portant un support (28) muni de moyens de préhension (29a-29b) propres à saisir une tôle ou une pièce, un premier moteur (16) associé à des moyens d'entraînement pour déplacer horizontalement le chariot et un second moteur (27) pour déplacer verticalement le coulisseau, ces deux moteurs étant montés fixes sur le bâti (1) et l'arbre de sortie du second moteur (27) étant relié à un arbre cannelé horizontal (22) monté à rotation sur et le long du bâti et sur lequel est claveté coulissant un pignon (21) immobilisé latéralement par rapport au coulisseau (17) caractérisé en ce que ledit pignon (21) est en prise avec une crémaillère verticale (20) solidaire du coulisseau (17), en ce que ledit chargeur comporte des moyens (32-33-34-35) pour équilibrer le couple exercé sur l'arbre cannelé (22) par le poids du coulisseau (17) et du support (28) équipé des moyens de préhension (29) et en ce que ces moyens d'équilibrage comprennent un vérin (33) commandant une crémaillère d'équilibrage (32) qui est en prise avec un pignon calé sur l'arbre cannelé (22), des moyens (34-35) empêchant ladite crémaillère (32) d'être entraînée en rotation par l'arbre cannelé (22).

2. Chargeur ou extracteur selon la revendication 1, caractérisé en ce que la crémaillère d'équilibrage (32) est en appui contre un galet tournant (34) d'axe fixe.

3. Chargeur ou extracteur selon la revendication 1 ou 2,
caractérisé en ce que le pignon coulissant (21) porte, dans son alésage central, une douille maintenant des billes engagées dans des cannelures de l'arbre cannelé (22).

4. Chargeur ou extracteur selon l'une des revendications 1 à 3,
caractérisé en ce que le premier moteur (16) est un moteur à courant continu commandé par un variateur statique, ce variateur étant agencé pour que la loi de mouvement de l'avance du chariot ainsi que celle de son recul correspondent à une accélération constante suivie d'une décélaration constante.

5. Chargeur ou extracteur selon l'une des revendications 1 à 4,
caractérisé en ce que le chariot (5) est fixé à au moins une courroie d'entraînement (9) qui passe sur une poulie (11) reliée à l'arbre du premier moteur (16).

6. Chargeur ou extracteur selon la revendication 5, caractérisé en ce que la courroie (9) est crantée.

7. Chargeur ou extracteur selon l'une quelconque des revendications 4 à 6,
caractérisé en ce que le long des rails de guidage (4) du chariot (5) sont disposés des détecteurs de proximité qui sont actionnés par le chariot (5) pendant son déplacement et agissent sur le variateur.

8. Chargeur ou extracteur selon l'une quelconque des revendications précédentes,
caractérisé en ce que le chariot (5) est monté sur des rails de guidage (4) par l'intermédiaire de patins de glissement.

9. Chargeur ou extracteur selon l'une quelconque des revendications 4 à 8,
caractérisé en ce qu'il coopère avec un calculateur contentant en mémoire des consignes nécessaires au fonctionnement du variateur.

**Claims**

1. Work piece loader or extractor including a mobile carriage (5) movable horizontally along a fixed frame (1), a vertically movable slide (17) mounted on the carriage (5) and carrying a support (28) with gripping means (29a-29b) adapted for gripping a metal sheet or a work piece, a first motor (16) associated with drive means for moving the carraige horizontally and a second motor (27) for moving the slide vertically, these two motors being fixedly mounted on the frame (1) and the output shaft of the second motor (27) being connected to a horizontal splined shaft (22) mounted for rotation on and along the frame and on which is slidably keyed a pinion (21) immobilized laterally with respect to the slide (17),
characterized in that said pinion (21) is engaged with a vertical rack (21) fixed to the slide (17), in that said loader includes means (32-33-34-35) for counterbalancing the torque exerted on this splined shaft (22) by the weight of the slide (17) and of the support (28) equipped with gripping means (29) and in that these counterbalancing means include an actuating cylinder (33) controlling a counterbalance rack (32) which is engaged with a pinion fixed on the splined shaft (22), means (34-35) preventing said rack (32) from being rotated by the splined shaft (22).

2. Loader or extractor according to claim 1, characterized in that the counterbalanced rack (32) bears against a rotary roller (34) with fixed axis.

3. Loader or extractor according to claim 1 or 2, characterized in that the sliding pinion (21) has, in its central bore, a socket maintaining balls engaged in splines of the splined shaft (22).

4. Loader or extractor according to one of claims 1 to 3, characterized in that the first motor (16) is a DC motor controlled by a static variator, this variator being adapted so that the law of movement of the advance of the carriage as well as that of its backward movement corresponds to a constant acceleration followed by a constant deceleration.

5. Loader or extractor according to one of claims 1 to 4, characterized in that the carriage (5) is fixed to at least one drive belt (9) which passes over a pulley (11) connected to the shaft of the first motor (16).

6. Loader of extractor according to claim 5, characterized in that the belt (9) is toothed.

7. Loader or extractor according to any one of claims 1 to 6, characterized in that along the guide rails (4) of the carriage (5) proximity detectors are disposed which are actuated by the carriage (5) during its movement and act on the variator.

8. Loader or extractor according to any one of the preceding claims, characterized in that the carriage (5) is mounted on guide rails (4) through sliding shoes.

9. Loader or extractor according to any one of claims 4 to 8, characterized in that it cooperates with a computer storing the references required for operation of the variator.

**Patentansprüche**

1. Belade- oder Ausziehvorrichtung für Werkstücke, bestehend aus einem beweglichen Wagen (5), der sich waagerecht auf einem festen Gestell (1) bewegt, einem beweglichen Schlitten (17), der senkrecht auf den Wagen (5) montiert ist und eine Halterung (28) trägt, die mit Greifmittel (29a-29b) zum Ergreifen eines Bleches oder eines Werkstückes versehen ist, einem ersten Motor (16) verbunden mit Antriebsmittel für die waagerechte Bewegung des Wagens, und einem zweiten Motor (27) für die senkrechte Bewegung des Schlittens, wobei diese zwei Motoren auf dem Gestell (1) fest montiert sind und die Abtriebswelle des zweiten Motors (27) mit einer waagerechten Keilwelle (22) verbunden ist, die rotierend auf und dem Gestell entlang montiert ist und auf der ein verschiebbares Ritzel (21) festgekeilt ist, das seitlich zum Schlitten (17) blockiert ist, gekennzeichnet dadurch, dass das besagte Ritzel (21) in Eingriff mit einer senkrechten, mit dem Schlitten (17) fest verbundenen Zahnstange (20) ist, dadurch, dass der Lader über Einrichtungen (32-33-34-35) verfügt, um das Moment auszugleichen, das auf die Keilwelle (22) ausgeübt wird durch das Gewicht des Schlittens (17) und der mit Greifmittel (29) ausgerüsteten Halterung (28), und dadurch, dass diese Ausgleichseinrichtungen einen Zylinder (33) umfassen, der eine Ausgleichszahnstange (32) antreibt, die in Eingriff mit einem auf der Keilwelle (22) festgekeilten Ritzel ist, wobei Einrichtungen (34-35) verhindern, dass die besagte Zahnstange (32) durch die Keilwelle (22) in Drehung versetzt wird.

2. Belade- oder Ausziehvorrichtung gemäss der Forderung 1, gekennzeichnet dadurch, dass die Ausgleichszahnstange (32) auf einer Drehrolle (34) mit feststehender Achse aufliegt.

3. Belade- oder Ausziehvorrichtung gemäss der Forderung 1 oder 2, gekennzeichnet dadurch, dass das verschiebbare Ritzel (21) in seiner Zentralbohrung eine Buchse trägt, die Kugeln festhält, die in den Keilnuten der Keilwelle (22) eingesetzt sind.

4. Belade- oder Ausziehvorrichtung gemäss einer der Forderungen 1 bis 3, gekennzeichnet dadurch, dass der erste Motor (16) ein Gleichstrommotor mit Antrieb durch einen statischen Variator ist, wobei dieser Variator so gestaltet ist, dass die Wagenvorlauf- und Wagenrücklaufgleichungen einer konstanten Beschleunigung gefolgt von einer konstanten Verzögerung entsprechen.

5. Belade- oder Ausziehvorrichtung gemäss einer der Forderungen 1 bis 4, gekennzeichnet dadurch, dass der Wagen (5) an mindestens einem Treibriemen (9) befestigt ist, der über eine Riemenscheibe (11) führt, die mit der Welle des ersten Motors (16) verbunden ist.

6. Belade- oder Ausziehvorrichtung gemäss der Forderung 5, gekennzeichnet dadurch, dass der Treibriemen (9) gezahnt ist.

7. Belade- oder Ausziehvorrichtung gemäss einer beliebigen der Forderungen 4 bis 6, gekennzeichnet dadurch, dass den Führungsschienen (4) des Wagens (5) entlang Näherungsschalter angebracht sind, die durch die Bewegung des Wagens (5) betätigt werden und auf den Variator einwirken.

8. Belade- oder Ausziehvorrichtung gemäss einer beliebigen der vorhergehenden Forderungen, gekennzeichnet dadurch, dass der Wagen (5) mittels Gleitschuhen auf Führungsschienen (4) montiert ist.

9. Belade- oder Ausziehvorrichtung gemäss einer beliebigen der Forderungen 4 bis 8, gekennzeichnet dadurch, dass sie mit einem Rechner zusammenarbeitet, der die für den Betrieb des Variators notwendigen Sollwerte gespeichert hat.

Fig.1

Fig. 2

# Fig. 3

# Fig. 4

# Fig. 5

# Fig. 6

0015 215